# EUROPEAN PATENT APPLICATION

(11) **EP 3 739 914 A1**
(43) Date of publication of application: **18.11.2020**
(21) Application number: 19305636.3
(22) Date of filing: 17.05.2019
(51) Int. Cl.: H04W 4/50, H04W 8/20

(54) **METHOD FOR UPGRADING A PROFILE STORED IN A SECURE ELEMENT**

(71) Applicant: GEMALTO SA, 92190 Meudon (FR)
(72) Inventor: PICO, Richard, 13881 GEMENOS CEDEX (FR); GATTONE, Alain, 13881 GEMENOS CEDEX (FR); PERTICARA, François, 13881 GEMENOS CEDEX (FR)
(74) Representative: Grevin, Emmanuel

(57) **Abstract**

The invention is a method for upgrading a first version (VI) of a profile stored in a secure element (41). An OTA platform (20) receives from an entity (10) said first version then a second version (V2) of said profile which are expressed using a same format. On receipt of the second version, the OTA platform identifies a difference between contents of said first second versions and automatically generates a required command (CD1) aiming at updating said the first version according to the content of the second version. Then the OTA platform automatically sends over-the-air the command to the secure element.

## Description

### (Field of the invention)

The present invention relates to methods of upgrading a profile stored in a secure element. It relates particularly to methods of replacing a current version of a profile by a new version of the profile in a secure element deployed on the field.

### (Background of the invention)

In a cellular telecommunication system like for example GSM, UMTS or LTE, a subscriber is able to communicate with a base station of an operator with his terminal. The terminal is for example a mobile terminal (like a mobile phone, a smartphone or a PDA) cooperating with a secure element (like a SIM card, a UICC, an embedded UICC also called eUICC or an integrated UICC also called iUICC). A profile contains a set of data reflecting a subscription.

GSMA standards define process to install a new profile on a secure element like a eUICC. A populating server, like a SM-DP+ (Subscription Manager - Data Preparation - Enhanced compared to the SM-DP of SGP.02 Technical Specifications), is in charge of installing a full profile in a secure element. Through a secure channel established with a Mobile Application using LPA (Local Profile Assistant), the SM-DP+ downloads entirely a profile on a targeted eUICC. This mechanism is called remote provisioning subscription (RPS).

However as soon as, the full profile is installed, subsequent profile updates are no more handled by SM-DP+ and GSMA standards.

Currently, to maintain up to date profiles on eUICCs, Mobile Network Operators (MNO) need to generate proprietary updating commands to their OTA platform. This generation could be complex and may generate some inconsistencies. In particular, when a new version of a profile is created, individuals known as technical experts (eTC) build a description of the new profile to be provided to the SM-DP+ in a format compliant with GSMA standards. Then technical experts manually treat differences between the old and new profile versions to build relevant updating commands adapted to proprietary APIs. Thus a technical expert provides different deliveries expressed according to different formats, each format being dedicated to a special use.

There is a need to provide improved method and system so that mobile network operators are able to maintain up to date profile on a secure element deployed on the field.

### (Summary of the Invention)

The invention aims at solving the above mentioned technical problem.

An object of the present invention is a computer-implemented method for upgrading a first version of a profile stored in a secure element. An OTA platform receives from an entity said first version then receives a second version of said profile. Said first and second versions are expressed using a same format. On receipt of the second version, the OTA platform identifies a difference between a first content of said first version and a second content of said second version and automatically generates a required command aiming at updating said first content according to the second content. The OTA platform automatically sends over-the-air the command to the secure element.

Advantageously, the entity may send to a populating server said first and second versions expressed using said same format. The populating server may be in charge of downloading the entire second version to a second secure element devoid of the first version and downloading the entire first version to a third secure element devoid of said profile.

Advantageously, the OTA platform may the command to the secure element using Remote File Management protocol as defined by ETSI 102 226 standard or Remote Application Management protocol as defined by Amendment B RAM over HTTP of GlobalPlatform ® 2.2 standard.

Advantageously, the OTA platform may send the command encapsulated in a script.

Advantageously, the profile may allow to connect a network of mobile network operator. The OTA platform may identify a difference between a first part of said first version and a second part of said second version and may notify the mobile network operator if the OTA platform is unable to generate a command aiming at updating said first part according to content of the second part.

Another object of the present invention is an OTA platform able to upgrade a first version of a profile stored in a secure element. The OTA platform is configured to receive from an entity said first version then a second version of said profile, said first and second versions being expressed using a same format. On receipt of the second version, the OTA platform is configured to identify a difference between a first content of said first version and a second content of said second version and to automatically generate a command aiming at updating said first content according to the second content. The OTA platform is configured to automatically send over-the-air the command to the secure element.

Advantageously, the OTA platform may be configured to send the command to the secure element using Remote File Management protocol as defined by ETSI 102 226 standard or Remote Application Management protocol as defined by Amendment B RAM over HTTP of GlobalPlatform ® 2.2 standard.

Advantageously, the OTA platform may be configured to send the command encapsulated in a script.

Advantageously, the profile may allow to connect a network of mobile network operator the OTA platform may be configured to identify a difference between a first part of said first version and a second part of said second version and to notify the mobile network operator if the OTA platform is unable to generate a command aiming at updating said first part according to content of the second part.

Another object of the present invention is a system for upgrading a first version of a profile stored in a secure element. The system comprises an OTA platform according to the invention and a populating server which is configured to receive said first and second versions expressed using said same format from said entity. The populating server is configured to download the entire second version to a second secure element devoid of the first version and to download the entire first version to a third secure element devoid of said profile.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts a flowchart showing a first example of method for updating a profile in a secure element according to the invention,
- Figure 2 depicts a flowchart showing a second example of method for updating a profile in a secure element according to the invention and
- Figure 3 shows an example of architecture of an OTA platform for updating a profile in a secure element according to the invention.

### (Detailed description of the preferred embodiments)

The invention may apply to any profile to be deployed in a secure element intended to contain a profile attached to a telecom subscription. The secure element cooperates with a telecom equipment in order to allow access to a telecom network. For instance, the secure element may be a SIM card, a UICC, a eUICC or an iUICC.

Secure elements are small devices which generally comprise a memory, a microprocessor and an operating system for computing treatments. Secure elements may comprise a plurality of memories of different types, like non-volatile memory and volatile memory. They are called "secure" because they are able to control the access to the data they contain and to authorize or not the use of data by other machines. The secure elements may also provide computation services based on cryptographic components. In general, secure elements have limited computing resources and limited memory resources and they are intended to be connected to a host machine which provides them with electric power. Secure elements may be removable or fixed to a host machine.

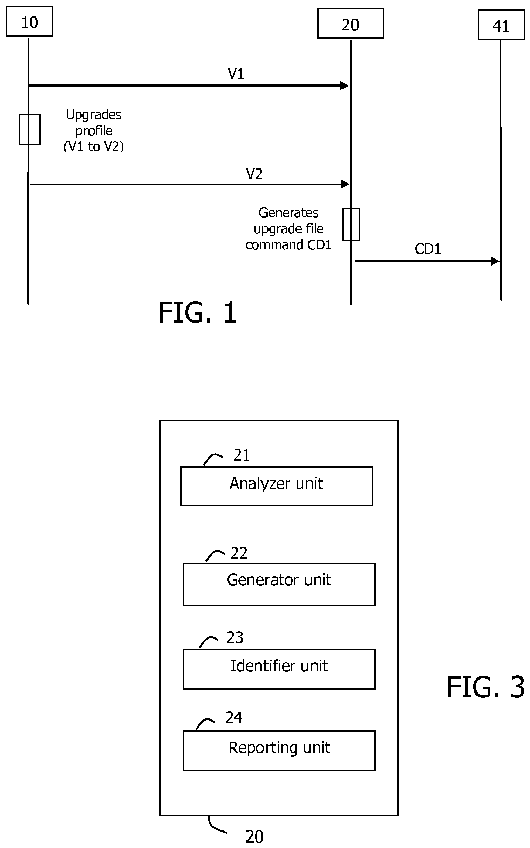

**Figure 1** illustrates a flowchart of an example of the method for upgrading a profile in a secure element according to the invention.

In this example, a first version V1 of a profile is assumed to have already built by a technical experts 10 (also named eTC) and installed in the UICC 41.

The technical expert provides the OTA platform 20 with the first version V1 of a profile. It is to be noted that the OTA platform receives the content of the full first version V1.

The technical expert generates a second version V2 of the profile by upgrading the first profile V1. For example, some parameters value may be modified in one or several files (or applications) of the profile. A new file (or application) can be added in the second version V2 (compared to version V1) or a previous file or application can be removed from the first version V1.

Then the technical expert sends the second version V2 of the profile to the OTA platform. It is to be noted that the OTA platform receives the description of the full second version V2 and that all versions (namely V1 and V2) received by the OTA platform are expressed in a same format. Preferably, the used format is compliant with SIMalliance© eUICC Profile Package: Interoperable Format Technical Specification V2.1 or upper referenced by GSMA specification SGP .22 RSP Technical Specification version 2.2 or upper.

Then the OTA platform identifies the differences between the content of the version V1 and the content of the version V2 and automatically generates command(s) required to update the content of the version V1 in the UICC (secure element) 41.

Typically, the OTA platform identifies a difference between a file EF1 belonging to the version V1 and a file EF2 belonging to the version V2 then generates an updating command CD1 intended to be executed by the secure element 41 for updating the content of the file EF1 with the content of the file EF2.

The OTA platform may automatically generate the required updating commands from a list of Unprotected Profile Package (UPP) as defined by GSMA specification - RSP Technical Specification Version 2.2 or upper.
An UPP consists of a sequence of Profile Element (PE) TLVs according to the SIMalliance© eUICC Profile Package: Interoperable Format Technical Specification V2.1.

Examples of UPP can be found at §11 of SIMalliance© eUICC Profile Package: Interoperable Format Technical Specification V2.1 for instance.

Then the OTA platform sends the updating command CD1 to the secure element via an Over-The-Air bearer.

The OTA platform can use Remote File Management protocol as defined by ETSI 102 226 standard or Remote Application Management protocol as defined by Amendment B RAM over HTTP of GlobalPlatform ® 2.2 standard to send the updating command CD1 to the secure element 41.

When several updating commands are generated by the OTA platform, the OTA platform may gather these updating commands in a single script which is sent to the secure element.

Preferably, the OTA platform ensures that the secure element executes all updating commands required to switch from the version V1 to the version V2 of the profile as an atomic operation. (i.e. either all updating commands are executed or none of them.)

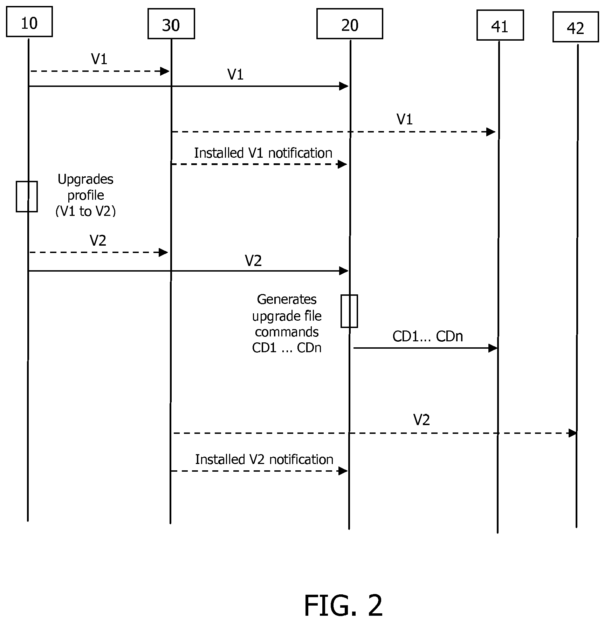

**Figure 2** illustrates a flowchart of another example of the method for upgrading a profile in a secure element according to the invention.

In this example, the secure elements are UICCs and the profile allows to connect a Telecom network of mobile network operator (MNO).

The technical expert 10 builds a first version V1 of a profile and sends it to both a populating server 30 and the OTA platform 20.

It is to be noted that the OTA platform and the populating server receive the description of the full first version V1 and that they both receive the first version V1 expressed in a same format. In other words, the same format is used to provision both the OTA platform and the populating server with the version V1. The populating server 30 may be implemented as a SM-DP+ specified by GSMA specification - RSP Technical Specification Version 2.2 or upper.

In one embodiment, the populating server 30 may be implemented as a downloader entity compliant with GSMA specification - SGP.02.

Then the populating server 30 installs the full first version V1 in the UICC 41 using the remote provisioning subscription (RPS) mechanism and notifies the OTA platform of the successful installation of the version V1 on the UICC 41. The OTA platform thus keeps track of the installation of the version V1 on the UICC 41. The OTA platform is able to know which profile version is currently installed in each secure element of a park.

The technical expert generates a second version V2 of the profile by upgrading the first profile V1. The two versions V1 and V2 are expressed using a same format.

Then the technical expert sends the second version V2 to both the populating server 30 and the OTA platform 20 using the same format.

Then the OTA platform identifies the differences between the content of the version V1 and the content of the version V2 and automatically generates commands CD1 ... CDn required to update the content of the version V1 in the secure element 41.

Preferably, the operation of analysis of the versions V1 and V2 is triggered by the receipt of the second version V2 by the OTA platform.

At this stage, the OTA platform knows that the version V1 has been installed on the UICC 41 and must be updated. The OTA platform sends the generated updating commands CD1 ... CDn to the UICC 41 which in turn executes the received updating commands in order to switch from the version V1 to the version V2.

If the first version V1 has been fully replaced with the second version V2 in the UICC 41, the OTA platform keeps a track of the updated version installed in the UICC 41.

If the OTA platform is unable (due to its internal policy) to generate a command aiming at updating an element of the content of the version V1, it notifies the mobile network operator that the profile version cannot be updated by the OTA platform. For instance, the OTA platform may be denied to update elements having a very high sensitivity level. For instance, the OTA platform can deny to update the value of the secret key Ki which is unique for a Telecom subscription.

The OTA platform can deny the generation of a command aiming at updating the value of data whose written access is protected by a right not granted to the OTA platform.

The populating server 30 can download (and install) the second version V2 to another UICC 42 which is devoid of the profile using the RPS mechanism. In case of successful installation of the second version V2 on the UICC 42, the populating server notifies the OTA platform of the new configuration (i.e. profile version currently installed) of the UICC 42.

**Figure 3** illustrates an example of architecture of an OTA platform for updating a profile in a secure element according to the invention.

The OTA platform 20 may be implemented as a computer machine or a software instance hosted in a hardware server. In both embodiments, a set of instructions is executed by a hardware processor to provide the functions specific to the OTA platform.

The OTA platform 20 comprises an Analyzer unit 21, a Generator unit 22, an Identifier unit 23 and a Reporting unit 24.

The Analyzer unit 21 is configured to analyze and compare two versions of a profile. It identifies all differences between content of the analyzed versions. Advantageously, the Analyzer unit 21 checks the presence of each container (e.g. File, Directory, register, etc.) in both profile versions then compares the content of each couple of corresponding containers. The Analyzer unit 21 can analyze and compare two nonconsecutive profile versions like V3 and V6.

The Generator unit 22 takes as input the differences identified by the Analyzer unit 21. The Generator unit 22 is configured to generate command(s) (also named updating commands) required to update the content of a target version (ex: version V1) with the content of a new version (ex: version V2) of the profile. The generated commands are intended to be executed by secure elements on which the target version is installed. Advantageously, the Generator unit 22 can be configured to build a script including the generated commands.

The Analyzer unit 21 and the Generator unit 22 may be implemented as a single unit.

The Identifier unit 23 is configured to identify a list of secure elements (e.g. eUICC or SIM cards) on which a target version of a profile is installed. The Identifier unit 23 may take as input the notification (reflecting the configuration of the installed profile on each secure element) received from the populating server 30. The Identifier unit 23 may rely on a database storing the current configuration of each secure element belonging to a park.

The Reporting unit 24 is configured to send a warning message to the MNO if an element of a target profile version cannot be automatically updated by the OTA platform. Preferably, the message comprises a reference to the element which cannot be updated and a reference to the target version of the profile. The warning message allows the MNO to know that the OTA platform cannot handle the automatic replacement of the target version by the new one. Thus the MNO can take appropriate actions to deal with the profile version replacement.

The Analyzer unit 21, the Generator unit 22, the Identifier unit 23 and the Reporting unit 24 can be implemented by software, hardware or a combination of hardware and software.

In addition, the OTA platform 20 is able to send over-the-air a set of updating commands to a remote secure element, as do the legacy OTA platforms.

Thanks to the invention, the populating server and the OTA platform receive the same description (i.e. specification expressed using a unique format) of a new profile version. Thus the entity (e.g. technical expert) in charge of the creation of new profile versions is no longer required to provide both full description of a new version and the list of differences between the new version and each previous versions. Consequently, the entity in charge of creation of new profile versions issues a single profile specification which is used for both new profile deployment (by the Populating server) and update (by the OTA platform) of already deployed previous versions of the profile on a fleet of secure elements.

Thanks to the invention, the entity in charge of the definition of new profile versions can reason in terms of updating a profile version and no longer in terms of updating a series of files. (as previously required for the legacy OTA platforms.)

Contrary to legacy mechanism, the OTA platform is now able to automatically translate differences between two profile versions in updating commands and to perform a campaign of update using RFM or RAM protocols on a park of secure elements on which a target profile version is already installed.

The invention is not limited to two versions of a profile and allow to handle any number of versions of any profile.

It must be understood, within the scope of the invention that the above-described embodiments are provided as non-limitative examples. For example, the number of updating commands generated by the OTA platform for a target version can by large (e.g. 10 or 30 commands). Features of the described examples may be partly and fully combined.

## Claims

1. A computer-implemented method for upgrading a first version (V1) of a profile stored in a secure element (41),
wherein an OTA platform (20) receives from an entity (10) said first version (V1) then a second version (V2) of said profile, said first and second versions being expressed using a same format,
wherein on receipt of the second version, the OTA platform identifies a difference between a first content of said first version and a second content of said second version and automatically generates a required command (CD1) aiming at updating said first content according to the second content, and
wherein the OTA platform automatically sends over-the-air the command to the secure element.

2. The method according to claim 1, wherein the entity (10) sends to a populating server (30) said first and second versions expressed using said same format, and wherein the populating server is in charge of downloading the entire second version (V2) to a second secure element devoid of the first version (V1) and downloading the entire first version (V1) to a third secure element devoid of said profile.

3. The method according to claim 1, wherein the OTA platform sends the command to the secure element using Remote File Management protocol as defined by ETSI 102 226 standard or Remote Application Management protocol as defined by Amendment B RAM over HTTP of GlobalPlatform ® 2.2 standard.

4. The method according to claim 1, wherein the OTA platform sends the command encapsulated in a script.

5. The method according to claim 1, wherein the profile allows to connect a network of mobile network operator, and wherein the OTA platform identifies a difference between a first part of said first version and a second part of said second version and notifies the mobile network operator if the OTA platform is unable to generate a command aiming at updating said first part according to content of the second part.

6. An OTA platform (20) able to upgrade a first version (V1) of a profile stored in a secure element (41),
wherein said OTA platform is configured to receive from an entity (10) said first version (V1) then a second version (V2) of said profile, said first and second versions being expressed using a same format,
wherein on receipt of the second version, the OTA platform is configured to identify a difference between a first content of said first version and a second content of said second version and to automatically generate a command (CD1) aiming at updating said first content according to the second content, and
wherein the OTA platform is configured to automatically send over-the-air the command to the secure element.

7. The OTA platform according to claim 6, wherein is configured to send the command to the secure element using Remote File Management protocol as defined by ETSI 102 226 standard or Remote Application Management protocol as defined by Amendment B RAM over HTTP of GlobalPlatform ® 2.2 standard.

8. The OTA platform according to claim 6, wherein the OTA platform is configured to send the command encapsulated in a script.

9. The OTA platform according to claim 6, wherein the profile allows to connect a network of mobile network operator, and wherein the OTA platform is configured to identify a difference between a first part of said first version and a second part of said second version and to notify the mobile network operator if the OTA platform is unable to generate a command aiming at updating said first part according to content of the second part.

10. A system for upgrading a first version (V1) of a profile stored in a secure element (41),
wherein the system comprises an OTA platform according to Claim 6 and a populating server (30) configured to receive said first and second versions expressed using said same format from said entity, and wherein the populating server is configured to download the entire second version (V2) to a second secure element devoid of the first version (V1) and to download the entire first version (V1) to a third secure element devoid of said profile.
